(19) Europäisches Patentamt
European Patent Office
Office européen des brevets

(11) **EP 4 397 823 B1**

(12) **EUROPEAN PATENT SPECIFICATION**

(45) Date of publication and mention
of the grant of the patent:
**22.04.2026 Bulletin 2026/17**

(21) Application number: **22863697.3**

(22) Date of filing: **02.09.2022**

(51) International Patent Classification (IPC):
***E04G 23/02*** *(2006.01)* ***B05C 5/02*** *(2006.01)*
***B29C 73/02*** *(2006.01)*

(52) Cooperative Patent Classification (CPC):
**E04G 23/0211; B05C 5/02; B29C 73/02**

(86) International application number:
**PCT/ES2022/070556**

(87) International publication number:
**WO 2023/031497 (09.03.2023 Gazette 2023/10)**

(54) **RESIN INJECTING SYSTEM, WATERPROOFING PRODUCT AND METHOD OF USE**

HARZINJEKTIONSSYSTEM, WASSERABDICHTUNGSPRODUKT UND
VERWENDUNGSVERFAHREN

SYSTÈME D'INJECTION DE RÉSINES ET DE PRODUIT IMPERMÉABILISANT, PROCÉDÉ
D'APPLICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2021 ES 202130826**

(43) Date of publication of application:
**10.07.2024 Bulletin 2024/28**

(73) Proprietor: **Sistemas de Reparación de
Impermeabilización
Flotante S.L.
50004 Zaragoza (ES)**

(72) Inventor: **NAVARRO LLIMA, Jaime J.
50004 Zaragoza (ES)**

(74) Representative: **Isern Patentes y Marcas S.L.
Avda. Diagonal, 463 Bis, 2°
08036 Barcelona (ES)**

(56) References cited:
**EP-A1- 3 128 105           EP-A2- 0 169 170
WO-A1-92/16707           DE-A1- 102015 112 840
DE-A1- 102015 112 840     ES-A1- 2 293 833
ES-B1- 2 293 833           KR-U- 20000 017 833
US-A- 4 352 262           US-A1- 2010 092 248
US-A1- 2010 092 248**

# Description

This specification relates to, as its title indicates, a waterproofing fluid injector, mainly resins of different components (polyurethane, acrylate, epoxy resin), especially designed to apply a thin layer of polyurethane to the surface layer of a waterproofing membrane and thus repair breaks or cracks that cause leaks without the need for major works, only carrying out small samples on the pavement and the method of application by performing the samples.

## Background of the invention

The use of resins is very common to correct or repair problems with humidity and leaks and even structural damage caused by fissures or cracks in floors and walls. To do this, injectors are usually used that are inserted and/or screwed externally to said slab or wall to apply the waterproofing fluid with a certain pressure.

The following two documents from the state of the art are of note:

> Document ES2293833 relates to a nozzle for injecting fluids in factory works with a crown designed to allow the nozzle to be fastened in oblique positions to the factory wall.
> Document US20100092248 relates to a nozzle designed to inject a repair fluid in a concrete structure with a crown or disc around the nozzle that has slotted holes distributed along the perimeter that allow the nozzle to be screwed to the concrete surface.

The invention described below is specifically designed to fuse with the pre-existing waterproofing membrane (usually asphalt or PVC membrane). This invention and process of application represents considerable cost savings; both insofar as the works to repair leaks due to cracks in the waterproofing membrane are minimised, as well as due to the simplicity and speed of the application.

## Description of the invention

Next follows the description of the resin and waterproofing product injector, also known as a packer, which has special features to inject a layer of fluid, generally resins, under the surface layer of the waterproofing membrane (asphalt or PVC) and thus the cracks in the membrane are repaired without the need for expensive work that involves lifting a large surface of soil to locate the crack and replace the damaged membrane.

This resin and waterproofing product injector consists of two elements. A first mostly tubular element, with a central through hole, made of a rigid material, mainly polymer and which is subdivided into three parts:

- An upper ring with a diameter slightly larger than the central body and with the central hole threaded internally.
- A central tubular body with several ribs or reinforcements distributed equidistantly along the entire contour.
- A base with a circular plan and a larger diameter than the two previous parts and that on the face adjacent to the central tubular body has marks or notches.

The second element of this resin and waterproofing product injector consists of a waterproofing membrane disc larger than the base of the first rigid element with a through hole in the centre, and that coincides with or is slightly larger than the diameter of the upper ring of the rigid element. This second element, unlike the first element, can be flexible and made of a material compatible with **fusion** to a waterproofing membrane (asphalt membrane or PVC).

To configure the resin and waterproofing product injector, subject matter of this invention, the second flexible element is inserted through the top of the first rigid element and moves down through the central hole and fuses to the face with holes or marks of the base of the first rigid element. Fusion is produced by applying a temperature greater than 50°, optionally, another fastening means or adhesive can be applied. The texture or notches of the base of the rigid piece favour fastening.

Lastly, a non-return valve is threaded into the threaded central hole to which the mouth of the injection hose is fastened.

The method of application of fluid under the waterproofing membrane with this resin and waterproofing product injector takes place as follows:

- Locating the moisture stain
- Marking the position of the moisture stain on the ground where the leak originates.
- Marking a necessary number of points around the position of the moisture stain to repair the damaged area, at a distance no less than one meter or no more than two metres, and are made to match a tile or pavement slab to do the least damage to the ground.
- Removing the construction material that covers the waterproofing membrane, such as the tile and/or cement, until said membrane is uncovered, avoiding causing damage to said membrane.
- Creating an access to the waterproofing membrane and inserting the base of the resin and waterproofing product injector, being hidden inside and under the waterproofing membrane.
- Fastening the base of the injector to the waterproofing membrane by applying heat.
- Covering the accesses created to the membrane to insert the base of the resin and waterproofing product injector with patches of waterproofing membrane so that they also fuse by applying heat.
- Coupling or hooking an injection hose to the non-return valve.

- Injecting the polyurethane in a liquid state with a pressure between 12 and 50 bars. The polyurethane expands under the first layer of waterproofing membrane over a perimeter of 2 metres to 4 metres before hardening, creating a thin waterproofing film and repairing any damage to the waterproofing membrane.
- Removing the non-return valve and, if necessary, cutting the protruding part of the resin and waterproofing product injector, repairing the hole and replacing the tile.

This process repairs and reinforces a very large surface of possible leaks and only a minimum number of holes or samples are necessary. Reducing damage and time impacts on costs, as is evident with this new repair and waterproofing process that allows this new resin and waterproofing product injection nozzle to be carried out with guarantees.

All information referring to examples or embodiments forms part of the description of the invention.

## Description of the figures

To better understand subject matter of the present invention, a preferred practical embodiment thereof has been represented in the attached plan.

Figure 1 shows the first tubular element (1) of the injector, made from a rigid polymer.

Figure 2 shows the second flexible element (8) made of a waterproofing membrane.

Figure 3 shows the injector with the first element (1) and second element (8) assembled.

Figure 4 shows the opening (11) made in the pavement to insert the injector.

Figure 5 shows a triangulation diagram to waterproof the area affected (16) by the leaks.

## Preferred embodiment of the invention

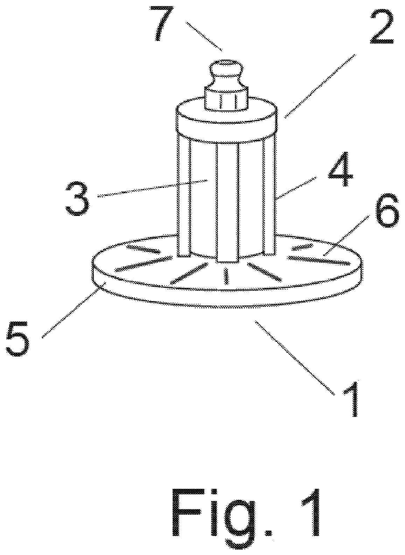

The device, resin and waterproofing product injector subject matter of the present invention shows in Figure 1 the first element (1) that constitutes it. It is a tubular structure with a through hole in the centre and is divided into three parts. An upper ring (2) with a diameter slightly larger than that of the central tubular body (3), in the central hole of which an internal thread is made. The second part is the aforementioned central tubular body (3) reinforced by ribs (4) distributed equidistantly along the entire surface. Lastly, a base (5) with a circular plan with larger diameter than the upper ring (2) and marks or notches (6) are applied on the face adjacent to the central tubular body (3). A non-return valve (7) is threaded on the free face of the upper ring (2).

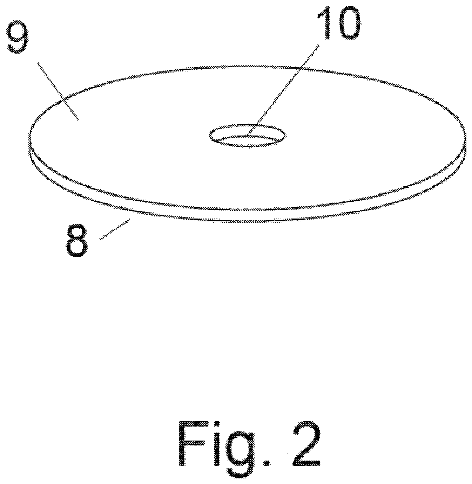

Figure 2 represents the flexible part of the resin and waterproofing product injector which is referred to as the second element (8). This consists of a disc (9) made of a membrane of a material compatible with adhesion to the waterproofing membrane with a through hole (10) in the centre. This hole has a diameter slightly larger than that of the upper ring (2) to allow the passage of this second element (8) through said upper ring (2) and to be fixed by heat sealing to the face adjacent to the central tubular body (3).

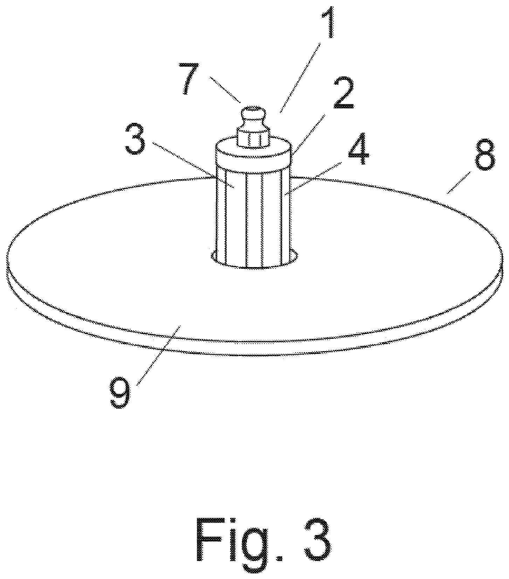

Figure 3 shows the resin and waterproofing product injector with the first element (1) and the second element (8) fastened to each other and ready to use. They are fastened by applying heat, and optionally reinforcing adhesive. The disc (9) hides the base (5) and the central tubular body (3) reinforced by ribs (4) and the upper ring (2) appears through the central hole (10) and a non-return valve (7) threaded on the centre of said upper ring (3).

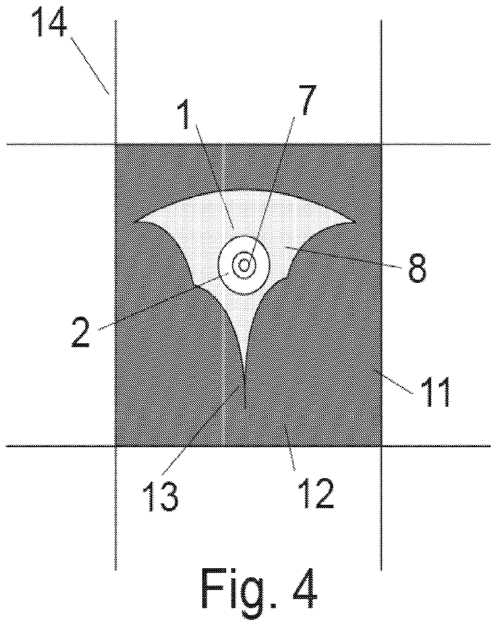

Figure 4 represents a sample (11). The sample (11) carried out in the ground, usually corresponds to the surface of at least one tile (14), and may vary depending on position, location and type of ground, but always seeking minimal surface damage. The sample (11) consists of removing all the existing construction material between the walkable ground and the first layer of waterproofing membrane (12). Once all the construction material has been removed, access (13) is created to the first layer of waterproofing membrane (12). The aim of this access (13) is to allow the passage of the second element (8) of the resin and waterproofing product injector and position it under the first layer of waterproofing membrane (12). Once positioned, the central tubular body (3), the upper ring (2) and the non-return valve (7) of the first element (1) appear outside. The cross cuts (13) are closed and the second element (8) of the resin and waterproofing product injector is sealed by heat to the first layer of waterproofing membrane (12).

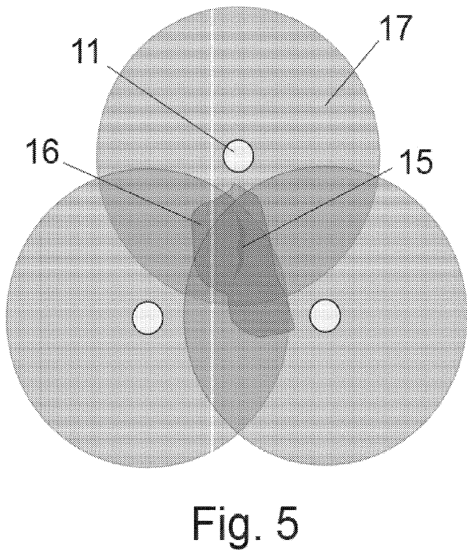

Figure 5 shows a diagram of the method of application to cover the largest application surface of the layer and ensure effective and long-lasting repair and waterproofing. It basically consists of carrying out a minimum of three samples (11) on the walkable surface around the moisture stain (16) located on the ceiling of the lower level and where the crack (5) or damage to the membrane is presumed to be. The distance can vary between $^1/_2$ metre to two meters from the epicentre of the stain, depending on the characteristics of the work to be repaired. The waterproofing fluid is injected at a pressure between 12 and 50 bars, covering a perimeter that can range between 1 metre and 3 metres. With this method the sealing and waterproofing surface around the moisture stain is sufficient and guarantees the correct repair and concentrates the greatest reinforcement in the area where the damage appears.

The person skilled in the art will readily understand that they can combine features of different embodiments with features of other possible embodiments, provided that this combination is technically possible.

## Claims

1. A resin and waterproofing product injector **characterised in that** it comprises;

   - a first element (1) that is mostly cylindrical with a through hole, with a central tubular body (3) with several ribs (4) or reinforcements distributed equidistantly along the entire cylindrical contour, an upper ring (2) with a diameter slightly larger than the central tubular body (3) and with the central hole threaded internally, a base (5) with a circular plan and a larger diameter than the two previous parts, the face of which adjacent to the central tubular body has marks or notches (6).
   - a second element (8) that consists of a disc (9) of a material compatible for the **fusion** with the waterproofing membrane larger than the base of the first element (1) with a through hole (10) in the centre with a diameter slightly larger than the upper ring (2).

2. The resin and waterproofing product injector, according to claim 1, **characterised in that** the second element (8), inserted through the hole (10) thereof passing through the top of the first element (1), is fastened to the base (5) thereof on the face adjacent to the central tubular body by applying heat.

3. The resin and waterproofing product injector, according to the preceding claims, **characterised in that** the first element is made of a rigid material.

4. The resin and waterproofing product injector, according to the preceding claims, **characterised in that** a non-return valve (7) is fastened in the central hole of the upper ring (2)

5. A method of application of fluid under a waterproofing membrane with a polyurethane injector according to any of the preceding claims, **characterised in that** it comprises the following steps:

   - locating the moisture stain (16)
   - carrying out samples (11) by removing the materials that cover the waterproofing membrane (12),
   - creating an access (13) to the waterproofing membrane.
   - inserting the second element (8) of the injector under the waterproofing membrane (12).
   - fusing the injector with the waterproofing membrane (12) by applying heat.
   - injecting the waterproofing fluid in a liquid state with a pressure between 12 and 50 bars until it expands under the first layer of waterproofing membrane in a perimeter of 1 metre to 4 metres.

   - unscrewing the non-return valve (7) and cutting the protruding part of the injector.

## Patentansprüche

1. Injektor für Harze und Abdichtungsprodukte, **dadurch gekennzeichnet, dass** er Folgendes umfasst;

   - ein erstes Element (1), das im Wesentlichen zylindrisch ist und eine Durchgangsbohrung aufweist, mit einem zentralen rohrförmigen Körper (3) mit mehreren gleichmäßig über den gesamten Zylinderumfang verteilten Rippen (4) oder Verstärkungen, einem oberen Ring (2) mit einem etwas größeren Durchmesser als der zentrale rohrförmige Körper (3) und dessen zentrale Bohrung ein Innengewinde aufweist, einer kreisförmigen Basis (5) mit einem größeren Durchmesser als die beiden vorherigen Teile, deren an den zentralen rohrförmigen Körper angrenzende Fläche Markierungen oder Kerben (6) aufweist.
   - ein zweites Element (8), das aus einer mit der Abdichtungsmembran verschmelzbaren Scheibe (9) besteht, die größer als die Basis des ersten Elements (1) ist und in der Mitte eine Durchgangsbohrung (10) mit einem etwas größeren Durchmesser als der obere Ring (2) aufweist.

2. Injektor für Harze und Abdichtungsprodukte nach Anspruch 1, **dadurch gekennzeichnet, dass** das zweite Element (8), das durch die Öffnung (10) und somit durch die Oberseite des ersten Elements (1) eingeführt wird, mittels Wärmezufuhr an dessen Basis (5) an der dem zentralen rohrförmigen Körper angrenzenden Fläche befestigt ist.

3. Injektor für Harze und Abdichtungsprodukte nach einem der vorhergehenden Ansprüche, **dadurch gekennzeichnet, dass** das erste Element aus einem starren Material besteht.

4. Injektor für Harze und Abdichtungsprodukte nach einem der vorhergehenden Ansprüche, **dadurch gekennzeichnet, dass** ein Rückschlagventil (7) in der zentralen Öffnung des oberen Rings (2) befestigt ist.

5. Verfahren zum Auftragen einer Flüssigkeit unter einer Abdichtungsmembran mit einem Polyurethan-Injektor nach einem der vorhergehenden Ansprüche, **dadurch gekennzeichnet, dass** es die folgenden Schritte umfasst:

   - Lokalisierung der feuchten Stelle (16).

- Entnahme von Proben (11) durch Entfernen der die Abdichtungsmembran (12) bedeckenden Materialien,
- Schaffen eines Zugangs (13) zur Abdichtungsmembran.
- Einführen des zweiten Elements (8) des Injektors unter die Abdichtungsmembran (12).
- Verschmelzen des Injektors mit der Abdichtungsbahn (12) durch Wärmezufuhr.
- Einspritzen der Abdichtungsflüssigkeit in flüssigem Zustand mit einem Druck zwischen 12 und 50 bar, bis sie sich unter der ersten Schicht der Abdichtungsmembran in einem Umkreis von 1 bis 4 Metern ausdehnt.
- Abschrauben des Rückschlagventils (7) und Abschneiden des überstehenden Teils des Injektors.

**Revendications**

1. Injecteur de résine et de produit d'étanchéité **caractérisé en ce qu'**il comprend ;

   - un premier élément (1) qui est essentiellement cylindrique avec un trou traversant, avec un corps tubulaire central (3) avec plusieurs nervures (4) ou renforts répartis de manière équidistante sur l'ensemble du contour cylindrique, un anneau supérieur (2) avec un diamètre légèrement plus grand que celui du corps tubulaire central (3) et avec le trou central fileté à l'intérieur, une base (5) avec un plan circulaire et un diamètre plus grand que les deux parties précédentes, dont la face adjacente au corps tubulaire central a des marques ou encoches (6).
   - un second élément (8) qui est constitué d'un disque (9) en un matériau compatible pour la fusion avec la membrane d'étanchéité plus grande que la base du premier élément (1), avec un trou traversant (10) au centre avec un diamètre légèrement plus grand que celui de l'anneau supérieur (2).

2. Injecteur de résine et de produit d'étanchéité, selon la revendication 1, **caractérisé en ce que** le second élément (8), inséré à travers le trou (10) de celui-ci passant à travers le dessus du premier élément (1), est fixé à la base (5) de celui-ci sur la face adjacente au corps tubulaire central par application de chaleur.

3. Injecteur de résine et de produit d'étanchéité, selon les revendications précédentes, **caractérisé en ce que** le premier élément est fait d'un matériau rigide.

4. Injecteur de résine et de produit d'étanchéité, selon les revendications précédentes, **caractérisé en ce qu'**un clapet anti-retour (7) est fixé dans le trou central de l'anneau supérieur (2).

5. Procédé d'application de fluide sous une membrane d'étanchéité avec un injecteur de polyuréthane selon l'une quelconque des revendications précédentes, **caractérisé en ce qu'**il comprend les étapes suivantes:

   - localiser la tache d'humidité (16).
   - effectuer des prélèvements (11) par retrait des matériaux qui recouvrent la membrane d'étanchéité (12),
   - créer un accès (13) à la membrane d'étanchéité.
   - insérer le second élément (8) de l'injecteur sous la membrane d'étanchéité (12).
   - fusionner l'injecteur avec la membrane d'étanchéité (12) par application de chaleur.
   - injecter le fluide d'étanchéité dans un état liquide avec une pression entre 12 et 50 bars jusqu'à ce qu'il se dilate sous la première couche de membrane d'étanchéité dans un périmètre de 1 mètre à 4 mètres.
   - dévisser le clapet anti-retour (7) et couper la partie saillante de l'injecteur.

Fig. 1

Fig. 2

# Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2293833
- US 20100092248 A